# EUROPEAN PATENT APPLICATION

(11) **EP 2 860 932 A1**
(43) Date of publication of application: **15.04.2015**
(21) Application number: 13187894.4
(22) Date of filing: 09.10.2013
(51) Int. Cl.: H04L 29/06

(54) **Multimedia Communications Service Handling**

(71) Applicant: Telefonaktiebolaget L M Ericsson (Publ), 164 83 Stockholm (SE)
(72) Inventor: Stille, Mats Ola, 167 54 Bromma (SE); Widebrant, Anders, 224 60 LUND (SE)
(74) Representative: Kransell & Wennborg KB

(57) **Abstract**

There is provided multimedia communications service handling in a user equipment. An on-going multimedia communications service is handled by the user equipment. During the handling a request for establishing a further multimedia communications service is received by the user equipment. The on-going multimedia communications service and the further multimedia communications service require access to a resource in the user equipment only capable of serving only one on-going multimedia communications service at a time. At least one of the on-going multimedia communications service and the further multimedia communications service is associated with a non-default application for executing multimedia communications services on the user equipment. Handling of the on-going multimedia communications service and the further multimedia communications service is then coordinated.

## Description

### TECHNICAL FIELD

Embodiments presented herein relate to a user equipment, and particularly to a method, a user equipment, a computer program, and a computer program product for multimedia communications service handling in the user equipment.

### BACKGROUND

In communication networks, there is always a challenge to obtain good performance and capacity for a given communications protocol, its parameters and the physical environment in which the communication network is deployed.

Modern wireless communications has moved from offering simple voice call services to offering advanced multimedia services. For example, the Third Generation Partnership Project (3GPP) Internet Protocol Multimedia Subsystem (IMS) service model allows for a third party specific application hosted in a user equipment (UE) to use an underlying standardized IMS communication service for transportation of the application commands and data. In this way the application traffic is enabled to traverse cross-network operator interfaces defined on the basis of the underlying service. This is valuable as it allows a destination end-user and UE belong to another network operator than the source end-user and UE. Hence the application does not need to implement a cross-operator settlement on its own as it thus may reuse an existing cross-operator settlement according to the above description.

However, once an application invitation reaches a destination UE, the destination UE needs to launch the same application as used by the source UE that hence initiated the invitation. An identifier for the application to be launched by the destination UE may be included in the invitation in a way described by for example in 3GPP TS 24.229, Section 5.7.1.9. If the underlying IMS communication service is multimedia telephony, the telephony manager of the destination UE has to dispatch the invitation to a specific multimedia telephony application instead of the standard telephony application in the destination UE. For this example, the standard telephony application would be the one to launch by the destination UE if there was no application identifier (the IMS application reference identifier (IARI) according to 3GPP TS 24.229) included in the session invitation.

Commonly when a voice call (e.g., the IMS communication service is 'MMTel') arrives in a voice capable UE, the receiving voice call handler, e.g. the Voice over Long Term Evolution (VoLTE) handler, (as disclosed in *GSM Association Official Document IR.92 - IMS Profile for Voice and SMS*; GSMA IR.92) will notify the telephony manager in the UE. The telephony manager will typically notify the user interface (UI) function of the default call application which will prompt the end-user to accept or decline the call. If the end-user accepts, the UI function will notify the telephony manager which in its turn notifies the call handler. The call handler may then send relevant answer signaling procedures to the network e.g. a SIP 200 OK message.

However, there is still a need for improved multimedia communications service handling in the UE.

### SUMMARY

An object of embodiments herein is to provide improved multimedia communications service handling in the UE.

The inventors of the enclosed embodiments have realized that there may be developed non-default (i.e., third party) applications for handling multimedia communications services in the UE. For example, during an on-going multimedia communications service which has been established as is known in the art, a request for a further multimedia communications service may arrive. The call handler will notify the telephony manager and including the identity of the application (IARI). The telephony manager will know based on the application identifier (IARI) which application it should launch. When the application is launched it will prompt the user for accept or decline. The inventors of the enclosed embodiments have realized that there is an uncertainty how to handle such a situation since the on-going multimedia communications service is unaware of the arrival of the request of the further multimedia communications service.

A particular object is therefore to provide improved multimedia communications service handling in the UE during an on-going multimedia communications service.

According to a first aspect there is presented a method for multimedia communications service handling in a user equipment (UE). The method is performed by the UE. The method comprises handling an on-going multimedia communications service. The method comprises receiving, during the handling, a request for establishing a further multimedia communications service. The on-going multimedia communications service and the further multimedia communications service require access to a resource in the UE only capable of serving only one on-going multimedia communications service at a time. At least one of the on-going multimedia communications service and the further multimedia communications service is associated with a non-default application for executing multimedia communications services on the UE. The method comprises coordinating handling of the on-going multimedia communications service and the further multimedia communications service.

Advantageously this provides improved multimedia communications service handling in the UE.

Advantageously this enables improved multimedia communications service handling in the UE during an on-going multimedia communications service.

Advantageously this enables the on-going multimedia communications service to be aware of the further multimedia communications service.

According to a second aspect there is presented a user equipment (UE) for multimedia communications service handling in the UE. The UE comprises a processing unit. The processing unit is arranged to handle an on-going multimedia communications service. The processing unit is arranged to receive, during the handling, a request for establishing a further multimedia communications service. The on-going multimedia communications service and the further multimedia communications service require access to a resource in the UE only capable of serving only one on-going multimedia communications service at a time. At least one of the on-going multimedia communications service and the further multimedia communications service is associated with a non-default application for executing multimedia communications services on the UE. The processing unit is arranged to coordinate handling of the on-going multimedia communications service and the further multimedia communications service.

According to a third aspect there is presented a vehicle. The vehicle comprises a UE according to the second aspect.

According to a fourth aspect there is presented a computer program for multimedia communications service handling in a user equipment (UE), the computer program comprising computer program code which, when run on the UE, causes the UE to perform a method according to the first aspect.

According to a fifth aspect there is presented a computer program product comprising a computer program according to the fourth aspect and a computer readable means on which the computer program is stored.

It is to be noted that any feature of the first, second, third, fourth and fifth aspects may be applied to any other aspect, wherever appropriate. Likewise, any advantage of the first aspect may equally apply to the second, third, fourth, and/or fifth aspect, respectively, and vice versa. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
Fig 1 is a schematic diagram illustrating a communication network according to embodiments;
Fig 2a is a schematic diagram showing functional modules of a user equipment according to an embodiment;
Fig 2b is a schematic diagram showing functional units of a user equipment according to an embodiment;
Fig 2c is a schematic diagram showing logical units of a user equipment according to an embodiment;
Fig 3 shows one example of a computer program product comprising computer readable means according to an embodiment;
Fig 4 schematically illustrates a vehicle according to an embodiment;
Figs 5 and 6 are flowcharts of methods according to embodiments; and
Figs 7, 8, 9, 10, 11, and 12 are signal flow diagrams according to embodiments.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

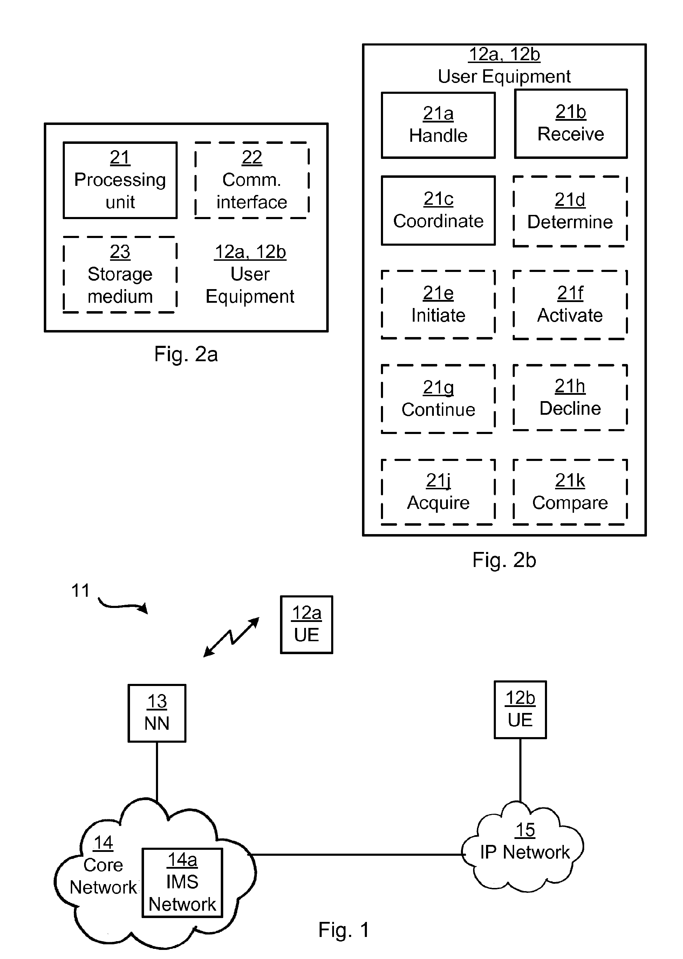

Fig 1 shows a schematic overview of an exemplifying communications network 11 where embodiments presented herein can be applied. The communications network 11 comprises a network node (NN) 13 providing network coverage over cells (not shown). A user equipment (UE) 12a, positioned in a particular cell is thus provided network service by the network node 13 serving that particular cell. As the skilled person understands, the communications network 11 may comprise a plurality of network nodes 13 and a plurality of UEs 12a operatively connected to at least one of the plurality of network nodes 13. The network node 13 is operatively connected to a core network 14. The core network 14 comprises an IMS network 14a. In general terms, the IMS network 14a provides the architectural framework for delivering IP multimedia services through the core network 14. The core network 14 may provide services and data to the user equipment 12a operatively connected to the network node 13 from an external Internet Protocol (IP) packet switched data network 15. At least parts of the communications network 11 may generally comply with any one or a combination of W-CDMA (Wideband Code Division Multiplex), LTE (Long Term Evolution), EDGE (Enhanced Data Rates for GSM Evolution, Enhanced GPRS (General Packet Radio Service)), CDMA2000 (Code Division Multiple Access 2000), WiFi, microwave radio links, HSPA (High Speed Packet Access), etc., as long as the principles described hereinafter are applicable.

A user equipment (UE) 12b may further have a wired connection to the external IP packet switched data network 15. Examples of user equipment 12a, 12b include, but are not limited to end-user equipment such as mobile phones, tablet computers, laptop computers, and stationary computers. In general terms, a user equipment 12a, 12b as herein disclosed may have either a wireless connection, or a wired connection, or both a wireless connection and a wired connection to the IP packet switched network 15. Hence the communications network 11 may comprise any combinations of purely wirelessly connected electronic devices 12a, purely wired connected electronic devices 12b, and electronic devices 12a, 12b with both wireless and wired connections.

One example of services and data which may be communicated through the communications system 31 is multimedia communications. In multimedia communications multimedia streams are communicated between two user equipment 12a, 12b (such as from user equipment 12a to user equipment 12b, or vice versa) or between a server of the IP network 15 and at least one user equipment 12a, 12b (such as from the server to at least one user equipment 12a, 12b or from at least one user equipment 12a, 12b to the server). The multimedia stream may comprise payload data in the form of audio and video content. As the skilled person understands the multimedia streams may comprise further payload data.

The embodiments disclosed herein relate to multimedia communications service handling in a user equipment 12a, 12b. In order to obtain multimedia communications service handling in a user equipment 12a, 12b there is provided a user equipment 12a, 12b, a method performed by the user equipment 12a, 12b, a vehicle 41 comprising a user equipment 12a, 12b, a computer program comprising code, for example in the form of a computer program product, that when run on a user equipment 12a, 12b causes the user equipment 12a, 12b to perform the method.

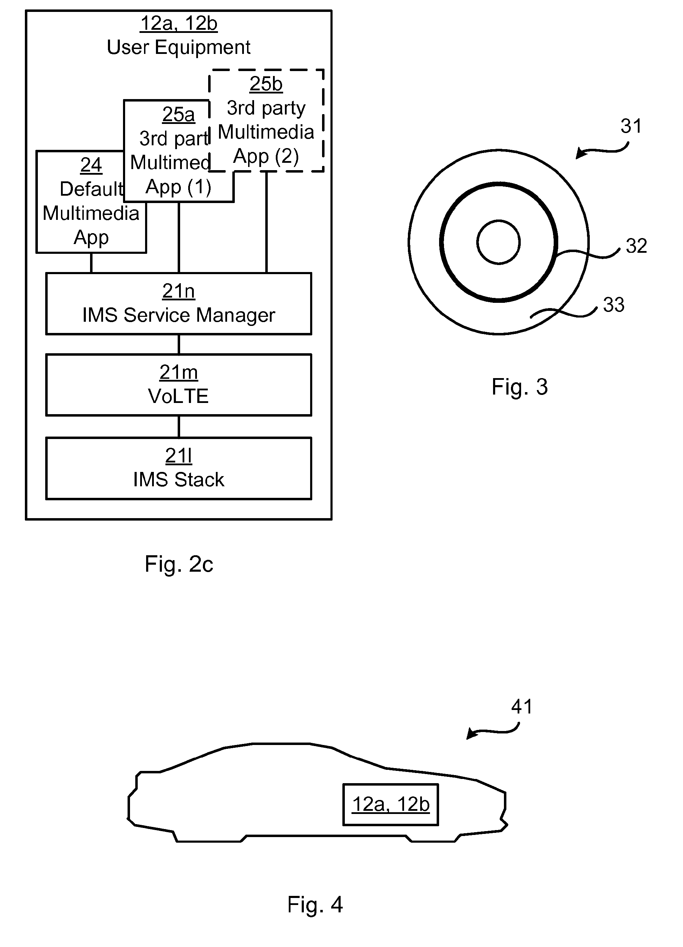

Fig 2a schematically illustrates, in terms of a number of functional modules, the components of a user equipment 12a, 12b according to an embodiment. A processing unit 21 is provided using any combination of one or more of a suitable central processing unit (CPU), multiprocessor, microcontroller, digital signal processor (DSP), application specific integrated circuit (ASIC), field programmable gate arrays (FPGA) etc., capable of executing software instructions stored in a computer program product 31 (as in Fig 3), e.g. in the form of a storage medium 23. Thus the processing unit 21 is thereby arranged to execute methods as herein disclosed. The storage medium 23 may also comprise persistent storage, which, for example, can be any single one or combination of magnetic memory, optical memory, solid state memory or even remotely mounted memory. The user equipment 12a, 12b may further comprise a communications interface 22 comprising analogue and digital components for wireless communication with a network node 13 and/or wired communications with an IP network 15. The processing unit 21 controls the general operation of the user equipment 12a, 12b, e.g. by sending data and control signals to the communications interface 22 and the storage medium 23, by receiving data and reports from the communications interface 22, and by retrieving data and instructions from the storage medium 23. Other components, as well as the related functionality, of the user equipment 12a, 12b are omitted in order not to obscure the concepts presented herein.

Fig 2b schematically illustrates, in terms of a number of functional units, the components of a user equipment 12a, 12b according to an embodiment. The user equipment 12a, 12b of Fig 2b comprises a number of functional units; a handling unit 21a, a receiving unit 21b, and a coordinating unit 21c. The user equipment 12a, 12b of Fig 2b may further comprises a number of optional functional units, such as any of a determining unit 21d, an initiating unit 21e, an activating unit 21f, a resuming unit 21g, a declining unit 21h, an acquiring unit 21j, and a comparing unit 21k. The functionality of each functional unit 21a-k will be further disclosed below in the context of which the functional units may be used. In general terms, each functional unit 21a-k may be implemented in hardware or in software. The processing unit 21 may thus be arranged to from the storage medium 23 fetch instructions as provided by a functional unit 21a-k and to execute these instructions, thereby performing any steps as will be disclosed hereinafter.

Fig 2c schematically illustrates, in terms of a number of logical units, the components of a user equipment 12a, 12b according to an embodiment. The user equipment 12a, 12b comprises an IMS stack logical unit 21l, a voice over LTE (VoLTE) logical unit 21m, an IMS service manager logical unit 21n, a default multimedia application logical unit 24, a first third party (i.e., non-default) multimedia application logical unit 25a, and optionally, a second third party (i.e., non-default) multimedia application logical unit 25b. The functionality of each logical unit 21l-n, 24, 25a, 25b will be further disclosed below in the context of which the functional units may be used. In general terms, each logical unit 21l-n, 24, 25a, 25b may be implemented in hardware or in software. The processing unit 21 may thus be arranged to from the storage medium 23 fetch instructions as provided by a logical unit 21l-n, 24, 25a, 25b and to execute these instructions, thereby performing any steps as will be disclosed hereinafter.

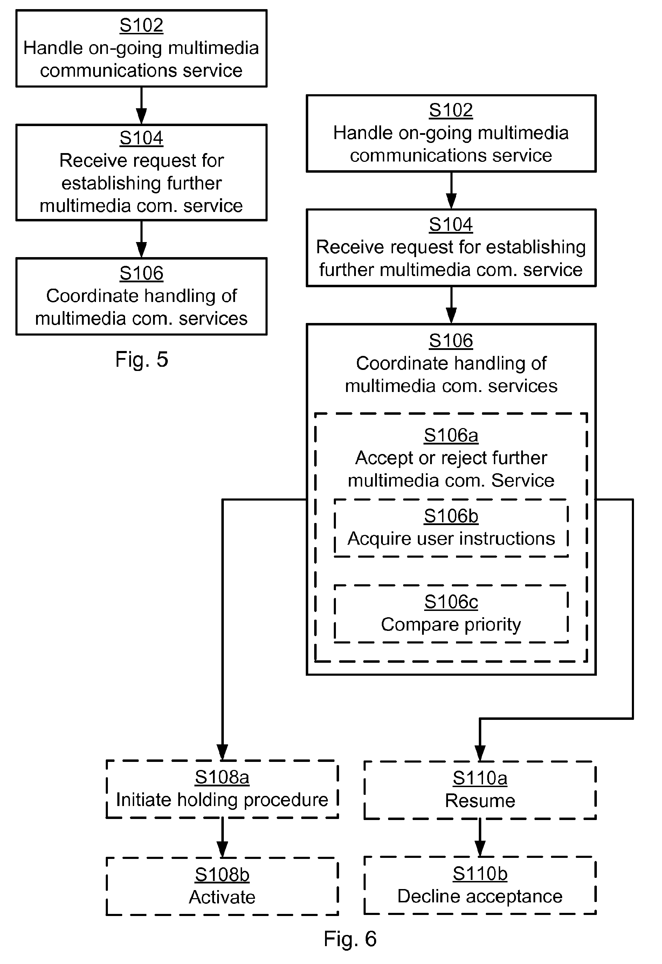

Figs 5 and 6 are flow charts illustrating embodiments of methods multimedia communications service handling in a user equipment 12a, 12b. The methods are performed by the user equipment 12a, 12b. The methods are advantageously provided as computer programs 32. Fig 3 shows one example of a computer program product 31 comprising computer readable means 33. On this computer readable means 33 a computer program 32 can be stored, which computer program 32 can cause the processing unit 21 and thereto operatively coupled entities and devices, such as the storage medium 23, and/or the communications interface 22 to execute methods according to embodiments described herein. The computer program 32 and/or computer program product 31 may thus provide means for performing any steps as herein disclosed.

In the example of Fig 3, the computer program product 31 is illustrated as an optical disc, such as a CD (compact disc) or a DVD (digital versatile disc) or a Blu-Ray disc. The computer program product 31 could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory. Thus, while the computer program 32 is here schematically shown as a track on the depicted optical disk, the computer program 32 can be stored in any way which is suitable for the computer program product 31.

The user equipment 12a, 12b may be provided as a standalone device or as a part of a further device. For example, the user equipment 12a, 12b may be provided in a vehicle 41. Fig 4 illustrates a vehicle 4 comprising at least one user equipment 12a, 12b as herein disclosed. The user equipment 12a, 12b may be provided as an integral part of the vehicle 41. That is, the components of the user equipment 12a, 12b may be integrated with other components of the vehicle 41; some components of the vehicle 41 and the user equipment 12a, 12b may be shared. For example, if the vehicle 41 as such comprises a processing unit, this processing unit may be arranged to perform the actions of the processing unit 21 associated with the user equipment 12a, 12b. Alternatively the user equipment 12a, 12b may be provided as a separate unit in the vehicle 41. The vehicle 41 may be a vehicle for land transportation, such as a car, a truck, a motorcycle, or the like, a vehicle for water transportation, such as a boat, a ship, a vessel, or a submarine, or the like, or a vehicle for aerial transportation, such as an aeroplane, a helicopter, or the like.

Reference is now made to Fig 5. A method for multimedia communications service handling in a user equipment (UE) 12a, 12b as performed by the UE 12a, 12b will now be disclosed. The processing unit 21 of the user equipment 12a, 12b is arranged to, in a step S102, handle an on-going multimedia communications service. The handling may be performed by executing functionality of the handling unit 21a. The computer program 32 and/or computer program product 31 may thus provide means for this handling. It is thus assumed that the UE 12a, 12b previously has received a request for establishing the currently on-going multimedia communications service from another UE, or that the UE 12a, 12b itself, e.g., by receiving instructions from a user interface, has initiated the currently on-going multimedia communications service

During the on-going multimedia communications service a request for establishing a further multimedia communications service may be received by the UE 12a, 12b. The processing unit 210f the user equipment 12a, 12b is therefore arranged to, in a step S104, receive, during the handling, a request for establishing a further multimedia communications service. The receiving may be performed by executing functionality of the receiving unit 21b. The computer program 32 and/or computer program product 31 may thus provide means for this receiving. The request may by the UE 12a, 12b be received from an external device and thus represent an incoming request for establishing the further multimedia communications service. Alternatively the request may be received via a user interface from the end-user of the UE 12a, 12b who wishes to use a further application 25a for executing multimedia communications services on the UE 12a, 12b during the on-going multimedia communications service. The request may be received by the IMS stack 21l.

The on-going multimedia communications service and the further multimedia communications service require access to a resource in the UE 12a, 12b. This resource in the UE 12a, 12b is capable of serving only one on-going multimedia communications service at a time. Example of such resources will be provided below. As a consequence thereof only one of the on-going multimedia communications service and the further multimedia communications service may be active at the time. Further, at least one of the on-going multimedia communications service and the further multimedia communications service is associated with a non-default application 25a, 25b for executing multimedia communications services on the UE 12a, 12b. Hence the UE 12a, 12b comprises at least two applications, at least one of which is a non-default application, for executing multimedia communications services on the UE 12a, 12b.

The UE 12a, 12b is enabled to be aware of the on-going multimedia communications service as well as the newly arrived further multimedia communications service, and so is arranged to coordinate between them. The processing unit 21 of the user equipment 12a, 12b is then arranged to, in a step S106, coordinate handling of the on-going multimedia communications service and the further multimedia communications service. The coordinating may be performed by executing functionality of the coordinating unit 21c. The computer program 32 and/or computer program product 31 may thus provide means for this coordinating. Examples of how the handling of the on-going multimedia communications service and the further multimedia communications service is coordinated will be provided below.

Reference is now made to Fig 6. Embodiments relating to further details of multimedia communications service handling in a UE 12a, 12b will now be disclosed.

Examples of resources in the UE 12a, 12b capable of serving only one on-going multimedia communications service at a time include, but are not limited to, the microphone, the speaker, the multimedia processor, the display and the input devices, but could also be other functional resources of the UE 12a, 12b.

The coordination may involve accepting or rejecting the further multimedia communications service. According to an embodiment the processing unit 21 of the user equipment 12a, 12b is therefore arranged to, in an optional step S106a, coordinate handling of the on-going multimedia communications service and the further multimedia communications service by determining whether to accept or reject the further multimedia communications service. The determining may be performed by executing functionality of the determining unit 21d. The computer program 32 and/or computer program product 31 may thus provide means for this determining.

There may be different ways to coordinate handling of the on-going multimedia communications service and the further multimedia communications service (as in step S106). Different embodiments relating thereto will now be described in turn.

For example, acceptance of the further multimedia communications service may result in pausing of the on-going multimedia communications service. According to an embodiment the processing unit 21 of the user equipment 12a, 12b is arranged to accept the further multimedia communications service by, in an optional step S108a, initiate a pausing procedure for the on-going multimedia communications service; and, in an optional step S108b, activate the further multimedia communications service. The initiating may be performed by executing functionality of the initiating unit 21e. The computer program 32 and/or computer program product 31 may thus provide means for this initiating. The activating may be performed by executing functionality of the activating unit 21f. The computer program 32 and/or computer program product 31 may thus provide means for this activating. Thus, an on-going call may thereby be paused if a further call is activated. Likewise, on-going playback from an audio or multimedia application may be paused if the further call is activated.

For example, rejection of the further multimedia communications service may result in uninterrupted continuation of the on-going multimedia communications service. According to an embodiment the processing unit 21 of the user equipment 12a, 12b is arranged to reject the further multimedia communications service by, in an optional step S110a, continue the on-going multimedia communications service; and, in an optional step S110b, decline acceptance of the further multimedia communications service. The continuing may be performed by executing functionality of the continuing unit 21g. The computer program 32 and/or computer program product 31 may thus provide means for this continuing. The declining may be performed by executing functionality of the declining unit 21h. The computer program 32 and/or computer program product 31 may thus provide means for this declining. Thus, an on-going call may thereby be resumed if a further call is declined.

It is noted that when immediately declining the further multimedia communications service, the on-going multimedia communications service may not have been put on hold, and may therefore not have to be explicitly resumed. Further, once the further multimedia communications service is terminated (such as on-hooked if the further multimedia communications service is a video call or voice call), the initially on-going multimedia communications service may be resumed again.

There may be different ways to determine whether to accept or reject the further multimedia communications service (as in step S106a). Different embodiments relating thereto will now be described in turn.

For example, the determining in step S106a may be based on instructions received from an end-user. According to an embodiment the processing unit 21 of the user equipment 12a, 12b is arranged to, in an optional step S106b, acquire user instructions whether to accept or reject the further multimedia communications service. The acquiring may be performed by executing functionality of the acquiring unit 21j. The computer program 32 and/or computer program product 31 may thus provide means for this acquiring. The end-user of the UE 12a, 12b is thereby enabled to determine whether to accept or reject the further multimedia communications service. The further multimedia communications service may thereby be accepted if the user instructions indicate acceptance of the same. Likewise, the further multimedia communications service may be rejected if the user instructions indicate rejection of the same.

For example, the determining in step S106a may be based on a priority of the services. According to an embodiment the processing unit 21 of the user equipment 12a, 12b is arranged to, in an optional step S106c, compare a priority of the on-going multimedia communications service to a priority of the further multimedia communications service. The comparing may be performed by executing functionality of the comparing unit 21k. The computer program 32 and/or computer program product 31 may thus provide means for this comparing. The further multimedia communications service may thereby be accepted if the further multimedia communications service has a higher priority than that of the on-going multimedia communications service. Likewise, the further multimedia communications service may be rejected if the further multimedia communications service has a lower priority than that of the on-going multimedia communications service. Hence, thereby an emergency call, if assumed to have a high priority, will always be prioritized; if the on-going multimedia communications service is an emergency call the further multimedia communications service will be rejected, and vice versa. This will enable an on-going emergency call not to be interrupted, and a further multimedia communications service being an emergency call always to be accepted. This could also apply to other communication services configured as "high priority" by the end-user or UE manufacturer.

Six embodiments relating to methods for multimedia communications service handling in a UE 12a, 12b as performed by the UE 12a, 12b will now be disclosed in turn. For the six embodiments disclosed below the on-going multimedia communications service and the further multimedia communications service use a default Internet protocol multimedia subsystem, IMS, communication service of the user equipment 12a, 12b. The default IMS communication service may be responsible for transportation of application commands and data of the multimedia communications service of the first multimedia type. Further, as is understood by the skilled person, the sequence charts do not show all SIP messages transmitted between a UE 12a, 12b and the network node 13; for brevity, not all response messages are shown.

### First embodiment

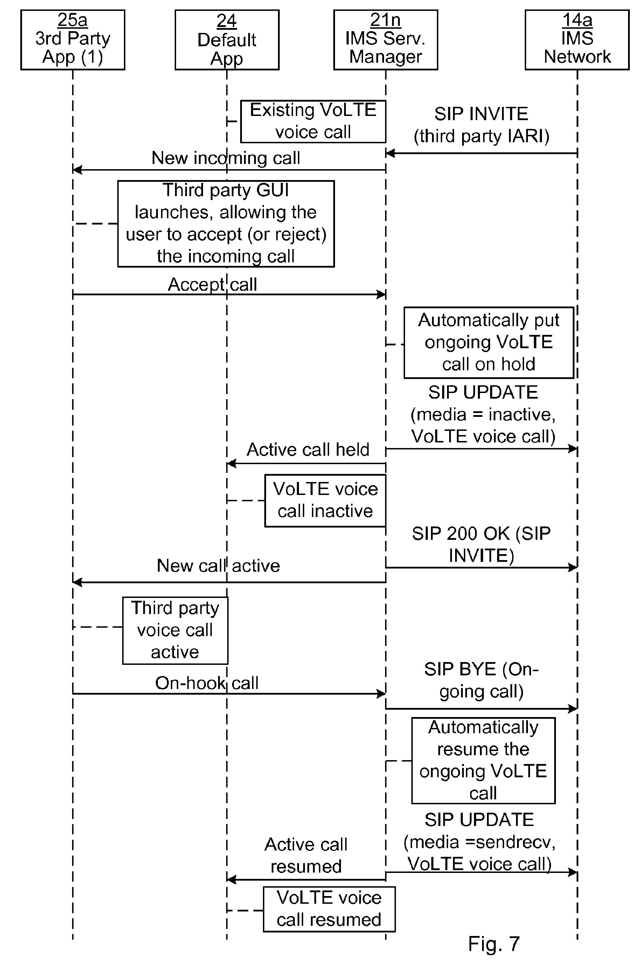

Reference is now made to Fig 7 illustrating a first embodiment according to which the user equipment 12a, 12b comprises one default application 24 for executing multimedia communications services on the user equipment 12a, 12b and one non-default application 25a for executing multimedia communications services on the user equipment 12a, 12b.

The user equipment 12a is assumed to handle an on-going multimedia communications service, as in step S102 above. For illustrative purposes the on-going multimedia communications service is an existing VoLTE voice call. The VoLTE voice call uses a telephony protocol known as "VoLTE", as standardized by 3GPP and GSMA. Since this is the standard protocol used by operator networks, it is handled by the default application 24 for executing multimedia communications services such as VoLTE voice calls.

The IMS Network 14a then forwards to the user equipment 12a an invitation in the form of an SIP INVITE (third party IARI) from another party, such as another user equipment 12b, to start another packet-switched voice call. It is assumed that this call, however, uses a different telephony standard, as indicated by the "IARI" provided in the invitation from the IMS Network 14a. This type of voice call cannot be handled by the default application 24, but should instead be handled by a non-default application 25a installed on the user equipment 12a. This invitation is by the user equipment 12a received as in step S104 above.

At this point, the user equipment 12a has been requested to handle two voice calls at once. It is assumed that the user equipment 12a only has the user interface and hardware resources to handle only one call at a time. Had the incoming VoLTE call (i.e. the further multimedia communications service) been designated to the same default application 24 that is handling the on-going VoLTE call (i.e., the on-going multimedia communications service), the way to handle this situation would be for the default application 24 to first put the on-going call on hold and then request the end-user of the user equipment 12a to either accept or reject the incoming call. However, the incoming VoLTE call has to be handled by the non-default application 25a, which by itself does not have any obvious way to coordinate with the default application 24.

The IMS service manager 21n then notifies the non-default application 25a of a new incoming VoLTE call, which leads the non-default application 25a to launch its user interface and give the end-user of the user equipment 12a the ability to accept or reject the new VoLTE call, as in steps S106a and S106b above.

It is now assumed that the end-user accepts the incoming VoLTE call, as in step S106a above. After receiving the acceptance from the non-default application 25a, the IMS service manager 21n automatically performs the network operation to put the on-going VoLTE call on hold by issuing SIP UPDATE (media = inactive, VoLTE voice call) signalling, and informs the default application 24 that the on-going VoLTE call has been held, as in step S108a above.

When receiving notification that the on-going VoLTE call has been held, the default application 24 releases its control over the user interface and media resources (such as microphone and speaker) of the user equipment 12a, thus freeing them up for potential use by the non-default application 25a.

The decision to accept the incoming VoLTE call by the non-default application 25a is by the IMS service manager 21n then forwarded to the IMS network 14a by the IMS service manager 21n issuing SIP 200 OK (SIP INVITE) signalling.

The incoming VoLTE call is then activated by the IMS service manager 21n. After some time, the incoming VoLTE call is terminated from the non-default application 25a by the end-user on-hooking the incoming VoLTE call. The IMS service manager 21n then notifies the IMS network 14a by issuing SIP BYE (on-going call) signalling to the IMS network 14a. After the incoming VoLTE call has ended, the non-default application 25a releases its resources needed for handling the VoLTE call.

Once the further party VoLTE call has ended, the IMS service manager 21n automatically un-holds and resumes the original on-going VoLTE call by issuing SIP UPDATE (media = sendrecv, VoLTE voice call) signalling to the IMS network 14a, and informs the default application 24 that the on-going VoLTE call is once again active, at which point the default application 24 may take over the user interface and other media resources needed to continue the original on-going VoLTE call.

### Second embodiment

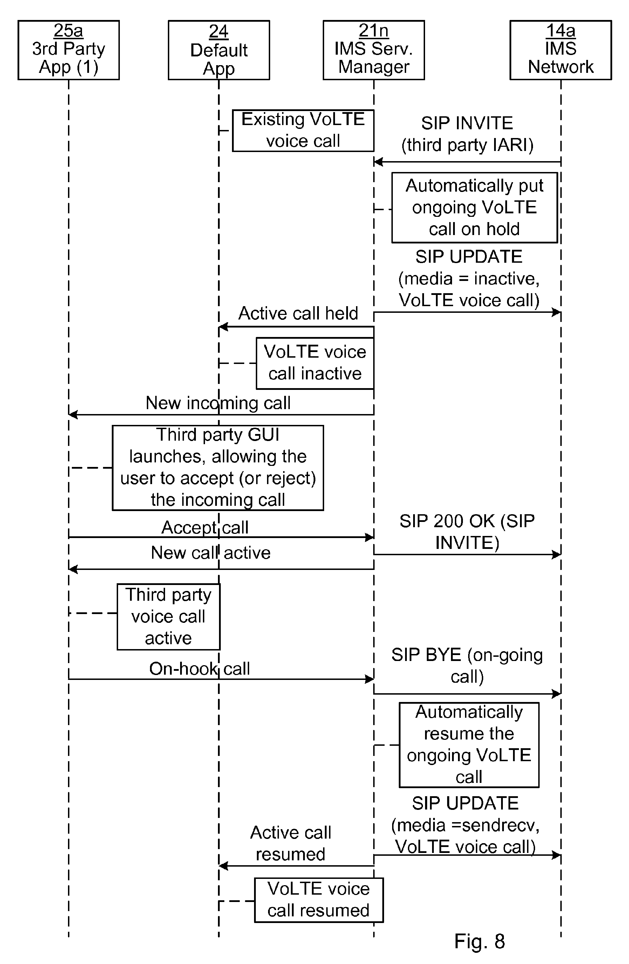

Reference is now made to Fig 8 illustrating a second embodiment according to which the user equipment 12a comprises one default application 24 for executing multimedia communications services on the user equipment 12a, 12b and one non-default application 25a for executing multimedia communications services on the user equipment 12a.

The user equipment 12a is assumed to handle an on-going multimedia communications service, as in step S102 above. For illustrative purposes the on-going multimedia communications service is an existing VoLTE voice call. The VoLTE voice call uses a telephony protocol known as "VoLTE", as standardized by 3GPP and GSMA. Since this is the standard protocol used by operator networks, it is handled by the default application 24 for executing multimedia communications services such as VoLTE voice calls.

The IMS Network 14a then forwards to the user equipment 12a an invitation in the form of an SIP INVITE (third party IARI) from another party, such as another user equipment 12b, to start another packet-switched voice call. It is assumed that this call, however, uses a different telephony standard, as indicated by the "IARI" provided in the invitation from the IMS Network 14a. This type of voice call cannot be handled by the default application 24, but should instead be handled by a non-default application 25a installed on the user equipment 12a. This invitation is by the user equipment 12a received as in step S104 above.

At this point, the user equipment 12a has been requested to handle two voice calls at once. It is assumed that the user equipment 12a only has the user interface and hardware resources to handle only one call at a time. Had the incoming VoLTE call (i.e. the further multimedia communications service) been designated to the same default application 24 that is handling the on-going VoLTE call (i.e., the on-going multimedia communications service), the way to handle this situation would be for the default application 24 to first put the on-going call on hold and then request the end-user of the user equipment 12a to either accept or reject the incoming call. However, the incoming VoLTE call has to be handled by the non-default application 25a, which by itself does not have any obvious way to coordinate with the default application 24.

After some time, the incoming VoLTE call is terminated from the non-default application 25a by the end-user on-hooking the incoming VoLTE call. The IMS service manager 21n then notifies the IMS network 14a by issuing SIP BYE (on-going call) signalling to the IMS network 14a. After the incoming VoLTE call has ended, the non-default application 25a releases its resources needed for handling the VoLTE call.

Once the further party VoLTE call has ended, the IMS service manager 21n automatically un-holds and resumes the original on-going VoLTE call by issuing SIP UPDATE (media = sendrecv, VoLTE voice call) signalling to the IMS network 14a, and informs the default application 24 that the on-going VoLTE call is once again active, at which point the default application 24 may take over the user interface and other media resources needed to continue the original on-going VoLTE call.

### Third embodiment

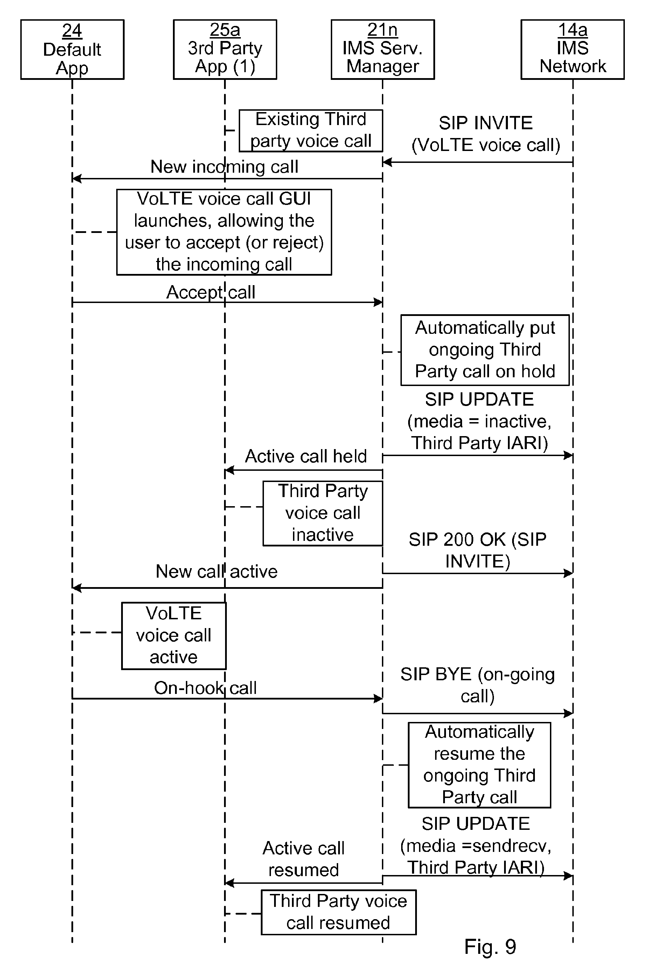

Reference is now made to Fig 9 illustrating a third embodiment according to which the user equipment 12a comprises one default application 24 for executing multimedia communications services on the user equipment 12a, 12b and one non-default application 25a for executing multimedia communications services on the user equipment 12a.

The user equipment 12a is assumed to handle an on-going multimedia communications service, as in step S102 above. For illustrative purposes the on-going multimedia communications service is an existing third party voice call. This type of voice call is handled by a non-default application 25a installed on the user equipment 12a.

The IMS Network 14a then forwards to the user equipment 12a an invitation in the form of an SIP INVITE (VoLTE voice call) from another party, such as another user equipment 12b, to start another packet-switched voice call. It is assumed that this call, however, uses a standard telephony standard, such as a VoLTE voice call, as indicated by an "IARI" not being provided in the invitation from the IMS Network 14a. The VoLTE voice call uses a telephony protocol known as "VoLTE", as standardized by 3GPP and GSMA. Since this is the standard protocol used by operator networks, it is to be handled by the default application 24 for executing multimedia communications services such as VoLTE voice calls. This invitation is by the user equipment 12a received as in step S104 above.

At this point, the user equipment 12a has been requested to handle two voice calls at once. It is assumed that the user equipment 12a only has the user interface and hardware resources to handle only one call at a time. Had the incoming VoLTE call (i.e. the further multimedia communications service) been designated to the same non-default application 25a that is handling the on-going VoLTE call (i.e., the on-going multimedia communications service), the way to handle this situation could be for the non-default application 25a to first put the on-going call on hold and then request the end-user of the user equipment 12a to either accept or reject the incoming call. However, the incoming VoLTE call has to be handled by the default application 24, which by itself does not have any obvious way to coordinate with the non-default application 25a.

The IMS service manager 21n then notifies the default application 24 of a new incoming VoLTE call, which leads the default application 24 to launch its user interface and give the end-user of the user equipment 12a the ability to accept or reject the new VoLTE call, as in steps S106a and S106b above.

It is now assumed that the end-user accepts the incoming VoLTE call, as in step S106a above. After receiving the acceptance from the default application 24, the IMS service manager 21n automatically performs the network operation to put the on-going VoLTE call on hold by issuing SIP UPDATE (media = inactive, third party IARI) signalling, and informs the non-default application 25a that the on-going VoLTE call has been held, as in step S108a above.

When receiving notification that the on-going VoLTE call has been held, the non-default application 25a releases its control over the user interface and media resources (such as microphone and speaker) of the user equipment 12a, thus freeing them up for potential use by the default application 24.

The decision to accept the incoming VoLTE call by the default application 24 is by the IMS service manager 21n then forwarded to the IMS network 14a by the IMS service manager 21n issuing SIP 200 OK (SIP INVITE) signalling.

The incoming VoLTE call is then activated by the IMS service manager 21n. After some time, the incoming VoLTE call is terminated from the default application 24 by the end-user on-hooking the incoming VoLTE call. The IMS service manager 21n then notifies the IMS network 14a by issuing SIP BYE (on-going call) signalling to the IMS network 14a. After the incoming VoLTE call has ended, the default application 24 releases its resources needed for handling the VoLTE call.

Once the further party VoLTE call has ended, the IMS service manager 21n automatically un-holds and resumes the original on-going VoLTE call by issuing SIP UPDATE (media = sendrecv, third party IARI) signalling to the IMS network 14a, and informs the non-default application 25a that the on-going VoLTE call is once again active, at which point the non-default application 25a may take over the user interface and other media resources needed to continue the original on-going VoLTE call.

### Fourth embodiment

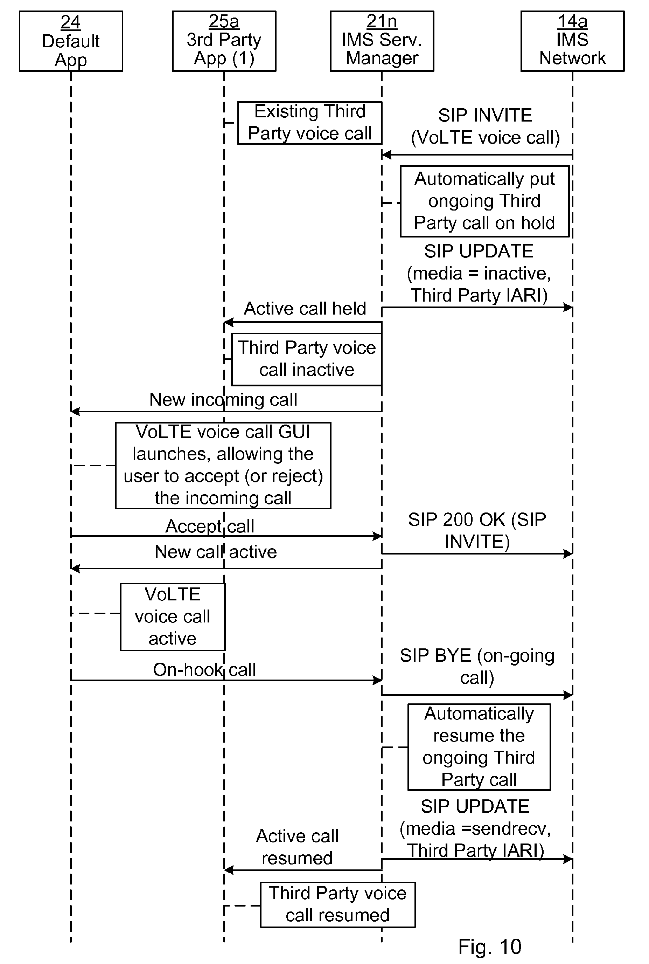

Reference is now made to Fig 10 illustrating a fourth embodiment according to which the user equipment 12a comprises one default application 24 for executing multimedia communications services on the user equipment 12a, 12b and one non-default application 25a for executing multimedia communications services on the user equipment 12a.

The user equipment 12a is assumed to handle an on-going multimedia communications service, as in step S102 above. For illustrative purposes the on-going multimedia communications service is an existing third party voice call. This type of voice call is handled by a non-default application 25a installed on the user equipment 12a.

The IMS Network 14a then forwards to the user equipment 12a an invitation in the form of an SIP INVITE (Default) from another party, such as another user equipment 12b, to start another packet-switched voice call. It is assumed that this call, however, uses a standard telephony standard, such as a VoLTE voice call, as indicated by an "IARI" not being provided in the invitation from the IMS Network 14a. The VoLTE voice call uses a telephony protocol known as "VoLTE", as standardized by 3GPP and GSMA. Since this is the standard protocol used by operator networks, it is to be handled by the default application 24 for executing multimedia communications services such as VoLTE voice calls. This invitation is by the user equipment 12a received as in step S104 above.

At this point, the user equipment 12a has been requested to handle two voice calls at once. It is assumed that the user equipment 12a only has the user interface and hardware resources to handle only one call at a time. Had the incoming VoLTE call (i.e. the further multimedia communications service) been designated to the same non-default application 25a that is handling the on-going VoLTE call (i.e., the on-going multimedia communications service), the way to handle this situation could be for the non-default application 25a to first put the on-going call on hold and then request the end-user of the user equipment 12a to either accept or reject the incoming call. However, the incoming VoLTE call has to be handled by the default application 24, which by itself does not have any obvious way to coordinate with the non-default application 25a.

After receiving the invitation, the IMS service manager 21n automatically performs the network operation to put the on-going VoLTE call on hold by issuing SIP UPDATE (media = inactive, third party IARI) signalling, and informs the non-default application 25a that the on-going VoLTE call has been held, as in step S108a above.

When receiving notification that the on-going VoLTE call has been held, the non-default application 25a releases its control over the user interface and media resources (such as microphone and speaker) of the user equipment 12a, thus freeing them up for potential use by the default application 24.

The IMS service manager 21n then notifies the default application 24 of a new incoming VoLTE call, which leads the default application 24 to launch its user interface and give the end-user of the user equipment 12a the ability to accept or reject the new VoLTE call, as in steps S106a and S106b above.

It is now assumed that the end-user accepts the incoming VoLTE call, the decision being forwarded to the IMS network 14a by the IMS service manager 21n issuing SIP 200 OK (SIP INVITE) signalling. The incoming VoLTE call is thus determined to be accepted, as in step S106a above. After some time, the incoming VoLTE call is terminated from the default application 24 by the end-user on-hooking the incoming VoLTE call. The IMS service manager 21n then notifies the IMS network 14a by issuing SIP BYE (on-going call) signalling to the IMS network 14a. After the incoming VoLTE call has ended, the default application 24 releases its resources needed for handling the VoLTE call.

Once the further party VoLTE call has ended, the IMS service manager 21n automatically un-holds and resumes the original on-going VoLTE call by issuing SIP UPDATE (media = sendrecv, third party IARI) signalling to the IMS network 14a, and informs the non-default application 25a that the on-going VoLTE call is once again active, at which point the non-default application 25a may take over the user interface and other media resources needed to continue the original on-going VoLTE call.

### Fifth embodiment

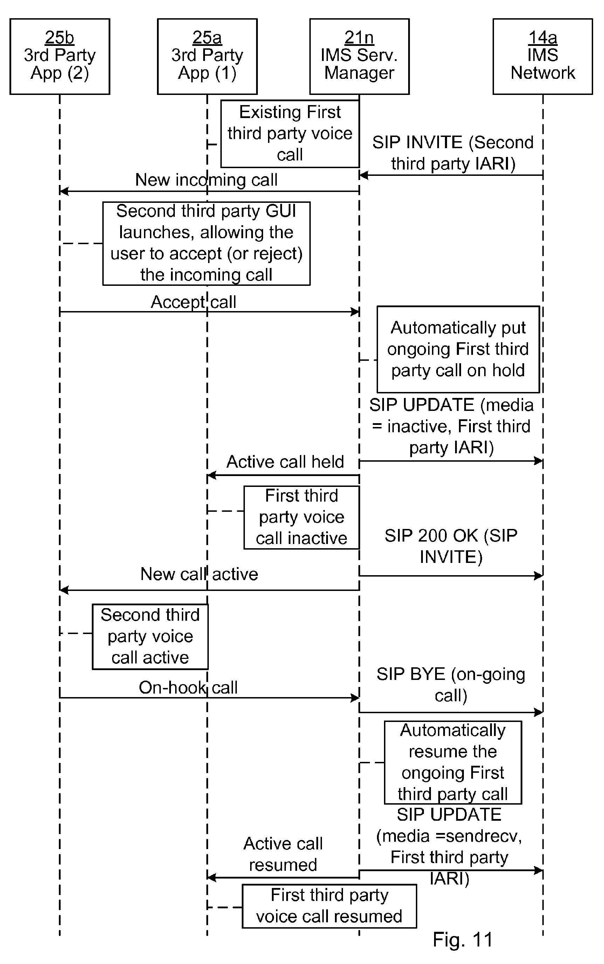

Reference is now made to Fig 11 illustrating a sixth embodiment according to which the user equipment 12a comprises two non-default applications 25a, 25b for executing multimedia communications services on the user equipment 12a.

The user equipment 12a is assumed to handle an on-going multimedia communications service, as in step S102 above. For illustrative purposes the on-going multimedia communications service is an existing first third party voice call. This type of voice call is handled by a first non-default application 25a installed on the user equipment 12a.

The IMS Network 14a then forwards to the user equipment 12a an invitation in the form of an SIP INVITE (second third party IARI) from another party, such as another user equipment 12b, to start another packet-switched voice call. It is assumed that this call, however, uses a second non-default application 25b installed on the user equipment 12a. This invitation is by the user equipment 12a received as in step S104 above.

At this point, the user equipment 12a has been requested to handle two voice calls at once. It is assumed that the user equipment 12a only has the user interface and hardware resources to handle only one call at a time. Had the incoming VoLTE call (i.e. the further multimedia communications service) been designated to the same first non-default application 25a that is handling the on-going VoLTE call (i.e., the on-going multimedia communications service), the way to handle this situation could be for the first non-default application 25a to first put the on-going call on hold and then request the end-user of the user equipment 12a to either accept or reject the incoming call. However, the incoming VoLTE call has to be handled by the second non-default application 25b, which by itself does not have any obvious way to coordinate with the first non-default application 25a.

The IMS service manager 21n then notifies the second non-default application 25b of a new incoming VoLTE call, which leads the second non-default application 25b to launch its user interface and give the end-user of the user equipment 12a the ability to accept or reject the new VoLTE call, as in steps S106a and S106b above.

It is now assumed that the end-user accepts the incoming VoLTE call, as in step S106a above. After receiving the acceptance from the second non-default application 25b, the IMS service manager 21n automatically performs the network operation to put the on-going VoLTE call on hold by issuing SIP UPDATE (media = inactive, first third party IARI) signalling, and informs the first non-default application 25a that the on-going VoLTE call has been held, as in step S108a above.

When receiving notification that the on-going VoLTE call has been held, the first non-default application 25a releases its control over the user interface and media resources (such as microphone and speaker) of the user equipment 12a, thus freeing them up for potential use by the second non-default application 25b.

The decision to accept the incoming VoLTE call by the second non-default application 25b is by the IMS service manager 21n then forwarded to the IMS network 14a by the IMS service manager 21n issuing SIP 200 OK (SIP INVITE) signalling.

The incoming VoLTE call is then activated by the IMS service manager 21n. After some time, the incoming VoLTE call is terminated from the second non-default application 25b by the end-user on-hooking the incoming VoLTE call. The IMS service manager 21n then notifies the IMS network 14a by issuing SIP BYE (on-going call) signalling to the IMS network 14a. After the incoming VoLTE call has ended, the second non-default application 25b releases its resources needed for handling the VoLTE call.

Once the further party VoLTE call has ended, the IMS service manager 21n automatically un-holds and resumes the original on-going VoLTE call by issuing SIP UPDATE (media = sendrecv, first third party IARI) signalling to the IMS network 14a, and informs the first non-default application 25a that the on-going VoLTE call is once again active, at which point the first non-default application 25a may take over the user interface and other media resources needed to continue the original on-going VoLTE call.

### Sixth embodiment

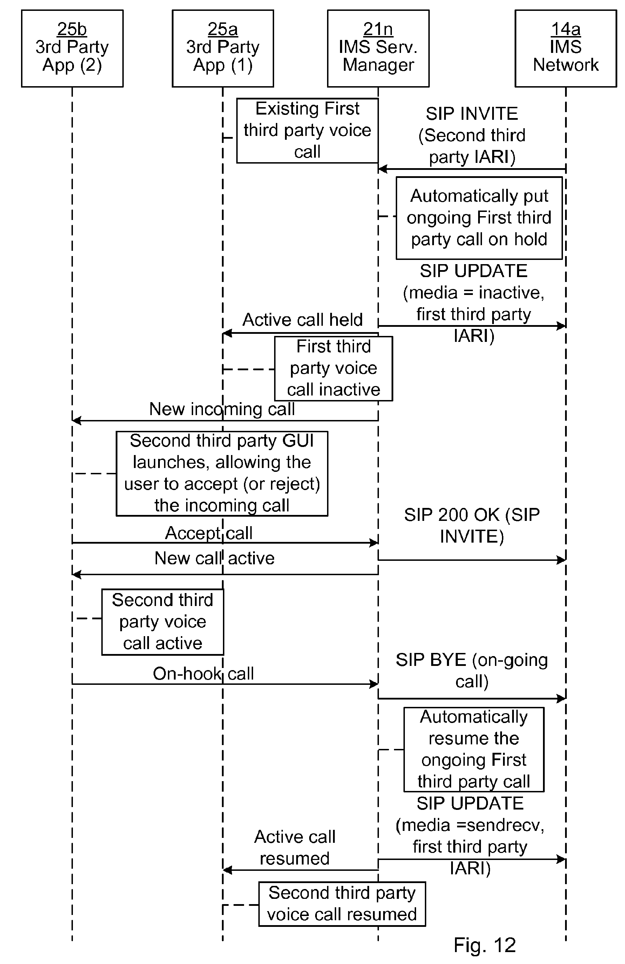

Reference is now made to Fig 12 illustrating a sixth embodiment according to which the user equipment 12a comprises two non-default applications 25a, 25b for executing multimedia communications services on the user equipment 12a.

The user equipment 12a is assumed to handle an on-going multimedia communications service, as in step S102 above. For illustrative purposes the on-going multimedia communications service is an existing first third party voice call. This type of voice call is handled by a first non-default application 25a installed on the user equipment 12a.

The IMS Network 14a then forwards to the user equipment 12a an invitation in the form of an SIP INVITE (second third party IARI) from another party, such as another user equipment 12b, to start another packet-switched voice call. It is assumed that this call, however, uses a second non-default application 25b installed on the user equipment 12a. This invitation is by the user equipment 12a received as in step S104 above.

At this point, the user equipment 12a has been requested to handle two voice calls at once. It is assumed that the user equipment 12a only has the user interface and hardware resources to handle only one call at a time. Had the incoming VoLTE call (i.e. the further multimedia communications service) been designated to the same first non-default application 25a that is handling the on-going VoLTE call (i.e., the on-going multimedia communications service), the way to handle this situation could be for the first non-default application 25a to first put the on-going call on hold and then request the end-user of the user equipment 12a to either accept or reject the incoming call. However, the incoming VoLTE call has to be handled by the second non-default application 25b, which by itself does not have any obvious way to coordinate with the first non-default application 25a.

After receiving the invitation, the IMS service manager 21n automatically performs the network operation to put the on-going VoLTE call on hold by issuing SIP UPDATE (media = inactive, first third party IARI) signalling, and informs the first non-default application 25a that the on-going VoLTE call has been held, as in step S108a above.

When receiving notification that the on-going VoLTE call has been held, the first non-default application 25a releases its control over the user interface and media resources (such as microphone and speaker) of the user equipment 12a, thus freeing them up for potential use by the second non-default application 25b.

The IMS service manager 21n then notifies the second non-default application 25b of a new incoming VoLTE call, which leads the second non-default application 25b to launch its user interface and give the end-user of the user equipment 12a the ability to accept or reject the new VoLTE call, as in steps S106a and S106b above.

It is now assumed that the end-user accepts the incoming VoLTE call, the decision being forwarded to the IMS network 14a by the IMS service manager 21n issuing SIP 200 OK (SIP INVITE) signalling. The incoming VoLTE call is thus determined to be accepted, as in step S106a above. After some time, the incoming VoLTE call is terminated from the second non-default application 25b by the end-user on-hooking the incoming VoLTE call. The IMS service manager 21n then notifies the IMS network 14a by issuing SIP BYE (on-going call) signalling to the IMS network 14a. After the incoming VoLTE call has ended, the second non-default application 25b releases its resources needed for handling the VoLTE call.

Once the further party VoLTE call has ended, the IMS service manager 21n automatically un-holds and resumes the original on-going VoLTE call by issuing SIP UPDATE (media = sendrecv, first third party IARI) signalling to the IMS network 14a, and informs the first non-default application 25a that the on-going VoLTE call is once again active, at which point the first non-default application 25a may take over the user interface and other media resources needed to continue the original on-going VoLTE call.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A method for multimedia communications service handling in a user equipment (12a, 12b), UE, the method being performed by the UE, comprising the steps of:
handling (S102) an on-going multimedia communications service;
receiving (S104), during said handling, a request for establishing a further multimedia communications service;
wherein the on-going multimedia communications service and the further multimedia communications service require access to a resource in the UE only capable of serving only one on-going multimedia communications service at a time;
wherein at least one of the on-going multimedia communications service and the further multimedia communications service is associated with a non-default application for executing multimedia communications services on the UE; and
coordinating (S106) handling of the on-going multimedia communications service and the further multimedia communications service.

2. The method according to claim 1, wherein the step of coordinating handling comprises:
determining (S106a) whether to accept or reject the further multimedia communications service.

3. The method according to claim 2, wherein accepting the further multimedia communications service comprises:
initiating (S108a) a pausing procedure for the on-going multimedia communications service; and
activating (S108b) the further multimedia communications service.

4. The method according to claim 2 or 3, wherein rejecting the further multimedia communications service comprises:
continuing (S110a) the on-going multimedia communications service; and
declining (S110b) acceptance of the further multimedia communications service.

5. The method according to claim 2, 3 or 4, wherein the step of determining comprises:
acquiring (S106b) user instructions whether to accept or reject the further multimedia communications service.

6. The method according to claim 2, 3 or 4, wherein the step of determining comprises:
comparing (S106c) a priority of the on-going multimedia communications service to a priority of the further multimedia communications service.

7. The method according to any one of claims 1 to 6, wherein one of the on-going multimedia communications service and the further multimedia communications service is a default application (24) for executing multimedia services of a first multimedia type on the UE.

8. The method according to any one of claims 1 to 6, wherein both the on-going multimedia communications service and the further multimedia communications service are non-default applications (25a, 25b) for executing multimedia services of a first multimedia type on the UE.

9. The method according to any one of the preceding claims, wherein the on-going multimedia communications service and the further multimedia communications service use a default Internet protocol multimedia subsystem, IMS, communication service of the UE.

10. The method according to claim 9 when dependent on claim 7 or 8, wherein the default IMS communication service is responsible for transportation of application commands and data of the multimedia communications service of the first multimedia type.

11. The method according to any one of the preceding claims, wherein at least one of the on-going multimedia communications service and the further multimedia communications service is associated with an IMS Application Reference Identifier, IARI.

12. A user equipment (12a, 12b), UE, for multimedia communications service handling in the UE, the UE comprising a processing unit (21) arranged to:
handle an on-going multimedia communications service;
receive, during said handling, a request for establishing a further multimedia communications service;
wherein the on-going multimedia communications service and the further multimedia communications service require access to a resource in the UE only capable of serving only one on-going multimedia communications service at a time;
wherein at least one of the on-going multimedia communications service and the further multimedia communications service is associated with a non-default application (25a) for executing multimedia communications services on the UE; and
coordinate handling of the on-going multimedia communications service and the further multimedia communications service.

13. A vehicle (41) comprising a user equipment according to claim 12.

14. A computer program (32) for multimedia communications service handling in a user equipment (12a, 12b), UE, the computer program comprising computer program code which, when run on the UE, causes the UE to:
handle (S102) an on-going multimedia communications service;
receive (S104), during said handling, a request for establishing a further multimedia communications service;
wherein the on-going multimedia communications service and the further multimedia communications service require access to a resource in the UE only capable of serving only one on-going multimedia communications service at a time;
wherein at least one of the on-going multimedia communications service and the further multimedia communications service is associated with a non-default application (25a) for executing multimedia communications services on the UE; and
coordinate (S106) handling of the on-going multimedia communications service and the further multimedia communications service.

15. A computer program product (31) comprising a computer program (32) according to claim 14, and a computer readable means (33) on which the computer program is stored.
